# FASCICULE DE BREVET EUROPEEN

(11) **EP 0 939 744 B1**
(45) Date de publication et mention de la délivrance du brevet: **15.03.2006**
(21) Numéro de dépôt: 98943954.2
(22) Date de dépôt: 10.09.1998
(51) Int. Cl.: C03B 27/044

(54) **DISPOSITIF DE REFROIDISSEMENT DE FEUILLES DE VERRE BOMBEES**
VORRICHTUNG ZUR HÄRTUNG GEBOGENEN GLASSCHEIBEN
DEVICE FOR COOLING CONVEX GLASS SHEETS

(30) Priorité: 11.09.1997 FR 9711287
(43) Date de publication de la demande: 08.09.1999
(73) Titulaire: SAINT-GOBAIN GLASS FRANCE, 92400 Courbevoie (FR)
(72) Inventeur: DOUCHE, Jean-Pierre, F-60150 Le Plessis Brion (FR); PETITCOLLIN, Jean-Marc, F-60150 Thourotte (FR); GARNIER, Gilles, F-60150 Thourotte (FR)
(74) Mandataire: Le Cam, Stéphane Georges Elie
(86) Numéro de dépôt international: PCT/FR1998/001933
(87) Numéro de publication internationale: WO 1999/012855

(56) Documents cités:
- EP-A- 0 133 113
- EP-A- 0 133 114
- EP-A- 0 571 287

## Description

L'invention concerne un dispositif de bombage et de refroidissement de feuilles de verre. Plus précisément, l'invention concerne un dispositif de bombage et de refroidissement des feuilles de verre au défilé, c'est-à-dire dans lequel les feuilles de verre avancent durant leur bombage et refroidissement. L'invention est décrite en référence à des techniques de bombage et de trempe de feuilles de verre par défilement sur un convoyeur à rouleaux présentant un profil courbe dans la direction de défilement des feuilles de verre.

Les techniques ci-dessus évoquées sont connues notamment des brevets français FR-B-2 242 219 et FR-B-2 549 465 et consistent à faire défiler des feuilles de verre, réchauffées dans un four horizontal, entre deux nappes de rouleaux - ou autres éléments toumants - disposés selon un profil curviligne, et passant au travers d'une zone terminale de trempe. Pour la production de vitres latérales, toits ouvrants ou autres vitrages, notamment de forme cylindrique, les nappes sont constituées par exemple par des tiges cylindriques droites disposées selon un profil circulaire. Les nappes peuvent encore être constituées d'éléments conférant une courbure secondaire aux vitrages, tels que des éléments coniques ou bien encore du type diabolo-tonneau. Cette technique permet une capacité de production très élevée car d'une part, les feuilles de verre n'ont pas à être largement espacées, une feuille de verre pouvant sans problème entrer dans la zone de formage alors que le traitement de la feuille précédente n'est pas achevé et d'autre part, si la longueur des rouleaux le permet, deux ou trois feuilles de verre peuvent être traitées simultanément de front.

La vitesse de défilement des plaques ou feuilles de verre est au moins égale à 10 cm/s et de l'ordre de 15 à 25 cm/s. La vitesse ne dépasse habituellement pas 30 cm/s pour autoriser un temps suffisant de trempe.

Dans des conditions de soufflage relativement standards et pour une feuille de verre de 3,2 mm d'épaisseur, devant respecter les prescriptions du règlement européen n° 43 relatif à l'homologation du vitrage de sécurité et des matériaux pour vitrages destinés à être montés sur les véhicules à moteur et leurs remorques, les techniques précédemment décrites sont tout-à-fait satisfaisantes. Selon les prescriptions du règlement précédemment cité, les contraintes de trempe doivent être telles que le vitrage présente, en cas de bris, un nombre de fragments qui dans tout carré de 5 x 5 cm. est ni inférieur à 40 ni supérieur à 350 (nombre porté à 400 pour des vitrages d'une épaisseur inférieure ou égale à 2,5 mm). Toujours selon ces prescriptions, aucun des fragments ne doit être de plus de 3.5 cm², sauf éventuellement dans une bande de 2 cm de large à la périphérie du vitrage et dans un rayon de 7,5 cm autour du point d'impact et aucun fragment allongé de plus de 7,5 cm ne doit exister.

Lorsque l'épaisseur des feuilles de verre diminue, et pour répondre aux mêmes normes de trempe, le coefficient d'échange thermique doit être fortement augmenté. Concernant des installations de trempe standard, c'est-à-dire des installations comportant des buses d'un diamètre donné, l'amélioration du coefficient d'échange thermique est obtenu par une augmentation du débit d'air qui conduit à une vitesse plus importante de l'air au niveau des feuilles de verre.

Une telle réalisation présente tout d'abord l'inconvénient de nécessiter des surpresseurs ou de nouvelles installations plus puissantes pour produire les débits d'air requis qui sont très onéreuses. Par ailleurs, cela conduit à des surpressions locales et un confinement de l'air qui ne s'évacue que très difficilement, notamment en face supérieure dans le cas d'un défilement sur un convoyeur à concavité tournée vers le haut. Un tel confinement conduit alors au contraire à une diminution du coefficient d'échange thermique.

Une autre solution consiste à diminuer le diamètre des buses pour augmenter la vitesse de l'air à débit constant. Dans un tel cas, la diminution du diamètre des buses nécessite un rapprochement des orifices par rapport aux feuilles de verre pour conserver les vitesses requises au niveau de la surface desdites feuilles de verre. Or pour obtenir un tel résultat, il est nécessaire d'utiliser des buses très longues qui conduisent à des pertes de charge très élevées, inacceptables d'un point de vue industriel, notamment du fait des coûts.

Le WO 91/11398 enseigne l'utilisation de canalisation trouées placées entre des rouleaux inférieurs de convoyage de vitres planes pour les refroidir par soufflage d'air.

Le EP-A2-884286, non publié à la date de dépôt de la présente demande, enseigne un vitrage trempé d'épaisseur comprise entre 2,3 et 3,5 mm présentant une contrainte de compression de surface moyenne de 1000-1300 kg/cm².

L'invention a ainsi pour but un nouveau dispositif de bombage et de refroidissement de feuilles de verre plus souples d'un point de vue utilisation que les techniques actuelles et permettant d'augmenter le coefficient d'échange thermique en obviant les inconvénients énoncés précédemment et plus particulièrement sans nécessiter des installations fondamentalement différentes et onéreuses.

Ce but est atteint selon l'invention par un dispositif de bombage et de refroidissement de trempe ou de durcissement thermique de feuilles de verre défilant sur un convoyeur à rouleaux comprenant deux nappes de rouleaux disposés selon un profil curviligne, entre lesquelles les fouilles de verre sont convoyées pour être bombées puis refroidies, lesdits rouleaux agissant sur les deux faces desdites feuilles, ledit dispositif comportant pour le refroidissement, des caissons de soufflage refroidissant les deux faces desdites feuilles, caractérisé en ce que des caissons insérés entre des rouleaux présentent une surface en regard de la feuille de verre à une distance de celle-ci inférieure à 30 mm et de préférence inférieure à 10 mm, ladite surface étant percée de plusieurs trous pour évacuer l'air en direction de la feuille de verre.

Par rouleaux, on entend tout type d'élément de révolution qui par sa forme et/ou sa disposition peut conférer une courbure aux feuilles de verre. Il s'agit par exemple de cylindres, de dispositifs du type diabolo-tonneau, de systèmes coniques, de systèmes contrefléchis, notamment tels que ceux décrits dans les brevets EP-B-0 263 030, EP-B-0 474 531.

Un tel dispositif selon l'invention permet effectivement une augmentation du coefficient d'échange thermique en conservant les installations de base de refroidissement et sans nécessiter de surpresseurs, notamment en vue d'obtenir des débits d'air soufflés plus importants. Les débits d'air soufflés n'étant pas augmentés par rapport aux conditions habituelles d'utilisation, les risques de surpression locale et donc de confinement d'air sont évités. Par ailleurs, la réalisation de caissons comportant une plaque percée de trous limite considérablement les pertes de charge, notamment par rapport à l'écoulement de l'air dans le tube constituant une buse de soufflage.

Selon une réalisation préférée de l'invention, les caissons sont positionnés au-dessus et en dessous de la trajectoire des feuilles de verre.

De préférence, les diamètres des trous sont compris entre 2 et 8 mm et avantageusement inférieurs à 5 mm ; ils sont répartis selon un pas inférieur à 20 mm et de préférence compris entre 3 et 6 mm. Cette réalisation préférée permet non seulement d'augmenter le coefficient d'échange thermique par rapport aux techniques habituelles de refroidissement, notamment pour un débit d'air donné, mais en outre elle permet d'obtenir une répartition plus homogène du refroidissement à la surface d'une feuille de verre. En effet, par rapport aux installations de refroidissement habituelles, les orifices de soufflage sont plus proches les uns des autres et conduisent à une homogénéité de soufflage plus importante à la surface d'une feuille de verre. Les installations habituelles de refroidissement sont constituées de buses réparties avec un pas généralement supérieur à 30 mm, ce qui conduit à un refroidissement de la surface du verre acceptable du point de vue résultat, mais nettement moins homogène que le dispositif proposé par l'invention.

Selon une réalisation avantageuse de l'invention, le dispositif, associé à une pression de soufflage inférieure à 3000 mm de colonne d'eau, autorise un coefficient d'échange thermique avec le verre d'au moins 800 W/m².°K et de préférence d'au moins 1000 W/m².°K. Les techniques actuelles, si elles ne sont pas associées à des moyens très onéreux, tels que des surpresseurs, ne peuvent pas dépasser un coefficient d'échange thermique de l'ordre de 800 W/m².°K.

Selon une variante de l'invention, le dispositif de refroidissement du dispositif selon l'invention est utilisé en début de zone de refroidissement, le reste de la zone restant selon une configuration habituelle. De cette façon, les feuilles de verre défilent sur un convoyeur, elles subissent un refroidissement en deux phases, le coefficient d'échange thermique étant plus important durant la première phase.

Une telle réalisation est particulièrement intéressante dans le cas d'une trempe du verre ; en effet, elle permet d'avoir un coefficient d'échange thermique élevé en début de trempe et plus faible ensuite. Les inventeurs ont su mettre en évidence que pour la trempe d'une feuille de verre donnée, une trempe modulée consistant en un coefficient d'échange thermique élevé au départ, puis faible ensuite, conduit à des résultats d'un point de vue trempe supérieurs à ceux obtenus avec un coefficient d'échange thermique constant, pour des coûts énergétiques globaux identiques.

Selon d'autres variantes de l'invention, il est possible de prévoir un refroidissement différencié d'une feuille de verre entre ses deux faces ; il est en effet notamment possible d'équiper l'unité de refroidissement d'un dispositif selon l'invention au regard d'une seule face des feuilles de verre, l'autre face étant refroidie par des dispositifs usuels. De cette façon, il est possible d'obtenir un coefficient d'échange thermique supérieur pour l'une des deux faces. Notamment dans le cas d'une trempe, une telle technique permet de modifier la courbure des feuilles de verre bombées.

Pour obtenir des résultats analogues, l'invention prévoit encore de différencier le coefficient d'échange thermique sur une même surface à un instant donné. Pour ce faire, l'invention prévoit avantageusement que la surface des caissons au regard d'une face du verre soit percée de trous dont les dimensions ne sont pas identiques pour tous. Selon une réalisation préférée de l'invention, les trous de soufflage sont à ouvertures variables ; celles-ci peuvent être obtenues par des éléments mobiles venant masquer partiellement ou totalement un trou.

Selon une réalisation préférée de l'invention, les rouleaux du convoyeur sont positionnés selon un profil courbe à concavité dirigée vers le haut. Le dispositif ainsi décrit selon l'invention est avantageusement destiné à la trempe de feuilles de verre bombées sur des installations du type de celles décrites dans les brevets français FR-B-2 242 219 et FR-B-2 549 465. Dans la technique décrite par ces documents, les rouleaux ont habituellement des diamètres compris entre 20 et 30 mm et sont espacés les uns des autres d'un pas compris entre 40 et 130 mm. Il ne pouvait être évident d'insérer dans ces installations des dispositifs tels que ceux de l'invention qui notamment dans le cas du faible diamètre des trous, doivent être très proches des surfaces des feuilles de verre ; en effet, il était possible de redouter un problème lié à l'évacuation de l'air soufflé. Les essais ont démontrés que malgré la proximité des trous de soufflage par rapport aux feuilles de verre, l'air peut être correctement évacueré ce qui conduit à des coefficients d'échange thermique supérieurs à ceux obtenus avec les installations de trempe usuelles.

L'utilisation d'un dispositif selon l'invention dans ce type d'installations va permettre le bombage et la trempe de feuilles de verre présentant une épaisseur inférieure à celles habituellement trempées sur ce type d'installations. En effet, les installations actuelles autorisent, le plus souvent, la trempe de feuilles de verre d'une épaisseur au minimum de 3,15 mm, ce qui correspond à un coefficient d'échange thermique d'environ 600 W/m².°K. Le dispositif selon l'invention permet sans autre modification la trempe de feuilles de verre d'une épaisseur de 2,85 mm voir 2,5 mm, ce qui correspond à un coefficient d'échange thermique pouvant atteindre 1000 W/m².°K.

L'invention permet également d'améliorer, notamment d'un point de vue rendement, les résultats habituellement obtenus pour la trempe de feuilles de verre comportant des trous traversant leur épaisseur. La présence de ce type de trous est relativement fréquente pour des feuilles de verre destinées à équiper des véhicules automobiles et étant montées de manière coulissantes pour autoriser une ouverture.

Le dispositif selon l'invention permet encore d'améliorer la qualité optique des feuilles de verre, celui-ci autorisant une répartition de soufflage plus homogène que les techniques habituelles. Cette qualité optique améliorée des feuilles de verre est d'autant plus intéressante pour la réalisation de vitrages feuilletés. En effet, l'association de deux feuilles de verre ou plus généralement de deux feuilles en matériaux transparents n'additionne pas leurs défauts d'un point de vue optique mais les augmente de façon bien plus importante.

La norme DIN 32 305 définit une « qualité optique » pour des vitrages latéraux destinés à l'industrie automobile.

L'invention permet ainsi de réaliser des vitrages feuilletés comportant au moins une feuille de verre présentant des contraintes superficielles supérieures à 60 Mpa, ledit vitrage feuilleté satisfaisant la norme DIN 32 305.

L'invention autorise notamment la réalisation de vitrage feuilleté comportant au moins une feuille de verre trempée présentant des contraintes superficielles supérieures à 100 Mpa et de préférence de l'ordre de 130 Mpa, ledit vitrage feuilleté satisfaisant la norme DIN 32 305.

Un vitrage feuilleté de ce type est notamment intéressant pour des fonctions de résistances aux impacts. Ces vitrages feuilletés peuvent comporter une ou plusieurs feuilles de verre quelles que soient leurs épaisseurs. Mais l'invention permet en outre de réaliser de tels vitrages feuilletés, avec des feuilles de verre d'une épaisseur inférieure à 3 mm et de préférence inférieure à 2 mm, lesdits vitrages feuilletés pouvant présenter l'épaisseur de vitrages monolithiques actuellement utilisés dans l'automobile.

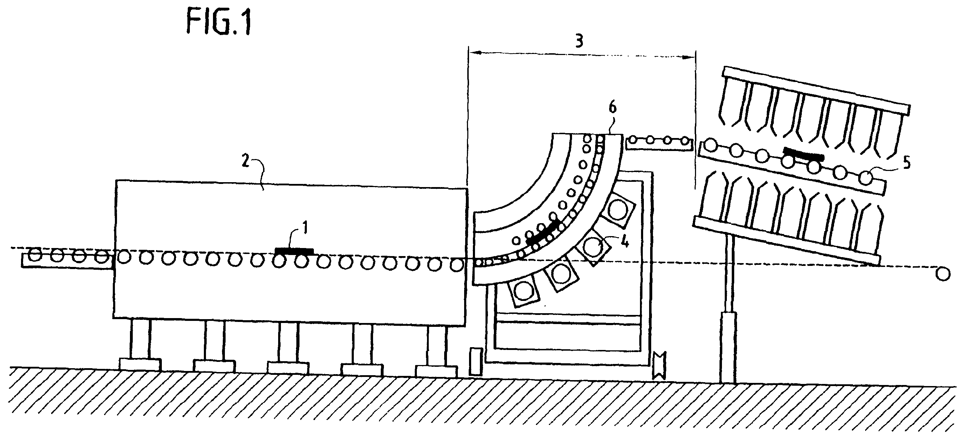

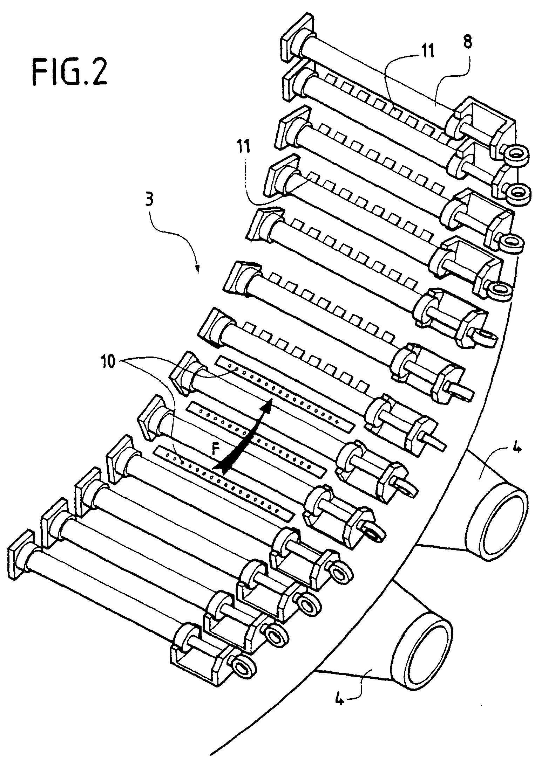

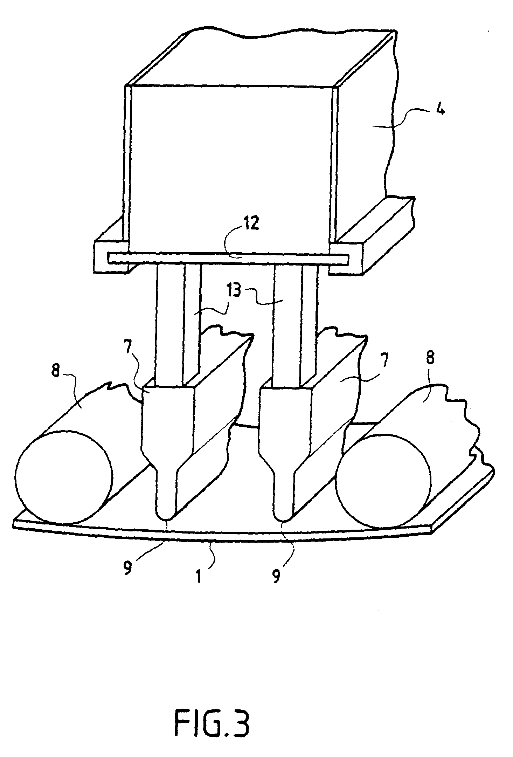

D'autres détails et caractéristiques avantageuses de l'invention ressortiront ci-après de la description d'un exemple de réalisation en référence aux figures qui représentent :
□ **figure 1 :** un schéma d'une ligne de production adaptée à la mise en oeuvre d'un dispositif selon l'invention,
□ **figure 2 :** un schéma d'une vue partielle d'une partie de la ligne de la figure 1 dans laquelle est inséré un dispositif selon l'invention.
**□ figure 3 :** un schéma d'une vue partielle en perspective d'une réalisation d'un dispositif selon l'invention.

Les figures 1, 2, 3 ne sont que des schémas illustrant l'invention qui ne reprennent pas tous les détails des installations et qui ne sont pas représentées à l'échelle pour en simplifier la compréhension.

Ces figures 1, 2, 3 ne doivent par ailleurs pas être interprétées comme une illustration limitative de l'invention.

Sur la figure 1, seuls les éléments de convoyage ont été représentés pour plus de clarté : la figure 1 décrit le cheminement suivi par les feuilles de verre dans des installations fonctionnant selon la technique, telles que connues notamment du brevet FR-B-2 242 219. Selon cette technique, la feuille de verre 1 traverse en premier lieu une zone de réchauffage 2 où elle est véhiculée par un convoyeur horizontal constitué par une série de rouleaux moteurs. A la sortie de la zone de réchauffage 2, sa température étant alors supérieure ou égale à sa température de bombage, elle pénètre dans la première partie de la zone de bombage 3 dans laquelle les rouleaux sont montés selon un profil cylindrique longitudinalement avec un rayon R. Les rouleaux forment ainsi un lit de conformation de préférence à concavité tournée vers le haut et en cheminant (de gauche à droite sur la figure 1) sur ce lit ; les feuilles de verre acquièrent ainsi une courbure cylindrique avec un rayon de courbure R obtenu sous l'action soit de la gravité, soit d'éventuels éléments supérieurs, soit de leur vitesse, ou bien encore de la combinaison de deux ou plusieurs de ces facteurs.

La première partie de la zone de bombage 3 est suivie d'une seconde partie qui est une zone de refroidissement où les rouleaux sont disposés de même selon le profil circulaire de rayon R. Les organes de refroidissement sont constitués par des caissons de soufflage 4 disposés de part et d'autre des rouleaux agissant ainsi sur les deux faces du vitrage de sorte qu'en passant entre ces caissons 4, et suivant la pression de soufflage choisie, en fonction de son épaisseur, la feuille de verre bombée est ou trempée ou simplement durcie en position bombée. Les feuilles de verre refroidies sont enfin évacuées par un convoyeur plan 5 qui traverse une zone de refroidissement secondaire, un dispositif basculant 6 facilitant éventuellement leur sortie de la zone de refroidissement 4.

Perpendiculairement à la courbure principale du rayon R, parallèlement aux bords droits, on peut éventuellement conférer à la feuille de verre une courbure secondaire de rayon r, r étant de préférence supérieur à 5 mètres, cette limite faisant référence à des considérations techniques relatives à la construction de rouleaux en forme. Dans ce cas, les rouleaux seront de préférence équipés de dispositifs de contre-fléchissement comme indiqué dans la demande de brevet EP-A-413 619 et le lit de conformation sera également complété par un second jeu de rouleaux agissant sur la face supérieure de la feuille de verre et aidant à la progression du verre. Ces éléments supérieurs sont également utilisés lorsque le lit de conformation suit une conique vraie, non cylindrique.

Les installations habituelles de ce type associent des buses de soufflage aux caissons 4. Il apparaît comme il l'a été dit précédemment que si la pression de soufflage peut effectivement être augmentée, ces installations atteignent des limites pour réaliser la trempe des feuilles de verre en ce qui concerne notamment leurs épaisseurs du fait de coefficients d'échange thermique limités.

Selon l'invention les caissons 4, illustrés sur les figures 2 et 3 sont associés à d'autres caissons 7 insérés entre les rouleaux 8 du convoyeur dans la seconde partie de la zone de bombage 3.

La figure 2 illustre de façon plus détaillée la partie inférieure de la zone de bombage 3 constituée essentiellement des rouleaux 8 sur lesquels les feuilles de verre défilent selon la direction F.

Selon cette réalisation, les trois ou quatre premiers rouleaux 8 suffisent à réaliser le bombage proprement dit des feuilles de verre. Dans la seconde partie de la zone de bombage, on procède au refroidissement des feuilles de verre par exemple pour les tremper. Sont ainsi insérés les caissons 7 selon l'invention qui présentent une surface 9 percés de trous 10 pour évacuer l'air de soufflage en direction des feuilles de verre défilant sur les rouleaux 8. Dans le cas de la figure 2, les dispositifs selon l'invention ne sont présents qu'au début de la zone de refroidissement selon une variante évoquée précédemment. Selon cette variante, la fin de la zone de refroidissement est équipée de buses traditionnelles 11. Il est possible selon cette variante d'améliorer la trempe des feuilles de verre pour un coût énergétique constant.

Selon d'autres variantes, le dispositif selon l'invention équipe l'ensemble de la zone de refroidissement.

La figure 3 décrit de façon plus précise l'insertion du dispositif selon l'invention entre deux rouleaux 8.

Sur cette figure 3, le caisson d'alimentation 4 est celui habituellement utilisé sur lequel sont raccordées les buses de soufflage. Ceci est un avantage économique certain de l'invention qui permet effectivement de conserver des installations existantes et d'y adapter de façon simple le dispositif selon l'invention. Cette adaptation est réalisée par l'intermédiaire d'une bride de montage 12 dont la fixation peut être simple et rapide ; cela permet de changer le dispositif de refroidissement et de passer de buses de soufflage traditionnelles à un dispositif selon l'invention rapidement. L'air est conduit depuis les caissons 4 par des tubes profilés 13 d'une section suffisante pour éviter les pertes de charge jusqu'aux caissons 7. Les caissons 7 sont fermés à l'autre extrémité par des plaques 9 comportant les trous de soufflage 10 évacuant l'air sur la surface des feuilles de verre 1 défilant sur les rouleaux 8 du convoyeur. Sur la figure 3, il apparaît que deux caissons 7 sont insérés entre deux rouleaux 8. Cette réalisation ne doit pas être interprétée de façon limitative, une réalisation avec un seul ou plus de deux caissons 7 entre deux rouleaux 8 étant réalisable en fonction de l'espacement prévu entre les rouleaux 8.

Des essais ont été réalisés sur une installation du type de celle représentée sur les figures. Le dispositif possédait les caractéristiques suivantes : les plaques 9 fermant les caissons 7 présentaient une largeur de 15 mm et comportaient deux rangées de trous 10 d'un diamètre de 2,5 mm, la distance séparant deux trous étant de 4 mm, de sorte que le « collage » de deux jets d'air soufflé n'apparaisse pas. La distance entre deux caissons 7 étaient d'au moins 20 mm. La distance séparant les plaques 9 des feuilles de verre était de 7 mm, avec une tolérance de 4 mm. Le dispositif présenté et notamment le nombre de rangées de trous ne doivent pas être interprétés de façon limitative, des plaques 9 comportant une ou plus de deux rangées de trous 9 pouvant être utilisées.

le dispositif ainsi décrit associé à une pression de soufflage de 3000 mm de colonne d'eau a permis de tremper, selon les prescriptions du règlement européen n° 43 relatif aux vitrages de sécurité, des feuilles de verre bombées d'une épaisseur de 2,55 mm. L'épaisseur minimum des feuilles de verre trempées selon les techniques habituelles est de 3,15 mm.

Le dispositif selon l'invention permet ainsi de réaliser le bombage puis la trempe de feuilles de verre plus minces par l'obtention de coefficient d'échange thermique supérieur. Si l'on réalise le bombage puis la trempe de feuille de verre d'une épaisseur d'au moins 3,15 mm avec le dispositif selon l'invention, il est alors également possible d'envisager une augmentation de la vitesse de défilement des feuilles de verre, supérieure à 25 cm/s, le bombage puis la trempe étant réalisée plus rapidement. Il est encore possible si l'on n'augmente pas la vitesse, de supprimer le système de basculement des feuilles de verre en sortie de trempe, car celles-ci étant obtenues plus rapidement la distance parcourue par les feuilles de verre autorisant la trempe peut être réduite. Il est ainsi possible de réceptionner les feuilles de verre sans système complexe à mettre en oeuvre.

## Revendications

1. Dispositif de bombage et de refroidissement de trempe ou de durcissement thermique de feuilles de verre (1) défilant sur un convoyeur à rouleaux (8) comprenant deux nappes de rouleaux (8) disposés selon un profil curviligne, entre lesquelles les feuilles de verre (1) sont convoyées pour être bombées puis refroidies, lesdits rouleaux (8) agissant sur les deux faces desdites feuilles, ledit dispositif comportant pour le refroidissement des caissons de soufflage refroidissant les deux faces desdites feuilles, **caractérisé en ce que** des caissons (7) insérés entre des rouleaux (8) présentent une surface (9) en regard de la feuille de verre (1) à une distance de celle-ci inférieure à 30 mm et de préférence inférieure à 10 mm, ladite surface (9) étant percée de plusieurs trous (10) pour évacuer l'air en direction de la feuille de verre (1).

2. Dispositif selon la revendication précédente, **caractérisé en ce que** des caissons (7) insérés entre des rouleaux (8) présentant une surface (9) en regard de la feuille de verre à une distance de celle-ci inférieure à 30 mm et de préférence inférieure à 10 mm et dont ladite surface (9) est percée de plusieurs trous (10) pour évacuer l'air en direction de la feuille de verre, sont positionnés au-dessus et en dessous de la trajectoire des feuilles.

3. Dispositif selon la revendication 1, **caractérisé en ce que** les caissons (7) insérés entre des rouleaux (8) présentant une surface (9) en regard de la feuille de verre (1) à une distance de celle-ci inférieure à 30 mm et de préférence inférieure à 10 mm et dont ladite surface (9) est percée de plusieurs trous (10) pour évacuer l'air en direction de la feuille de verre, équipent ledit dispositif au regard d'une seule face.

4. Dispositif selon l'une des revendications précédentes, **caractérisé en ce que** les rouleaux (8) sont positionnés selon un profil courbe à concavité dirigée vers le haut.

5. Dispositif selon la revendication précédente, **caractérisé en ce que** des rouleaux (8) présentant une surface (9) en regard de la feuille de verre (1) à une distance de celle-ci inférieure à 30 mm et de préférence inférieure à 10 mm et dont ladite surface (9) est percée de plusieurs trous (10) pour évacuer l'air en direction de la feuille de verre (1), sont insérés entre les rouleaux (8) supérieurs.

6. Dispositif selon l'une des revendications précédentes, **caractérisé en ce que** les rouleaux (8) sont des éléments de révolution tels que des cylindres, des dispositifs de type diabolo-torineau, des systèmes coniques, des systèmes contrefléchis.

7. Dispositif selon l'une des revendications précédentes, **caractérisé en ce que** les diamètres des trous (10) sont compris entre 2 et 8 mm et sont répartis selon un pas compris entre 3 et 6 mm.

8. Dispositif selon l'une des revendications précédentes, **caractérisé en ce que** le diamètre des rouleaux (8) est compris entre 20 et 30 mm.

9. Dispositif selon l'une des revendications précédentes, **caractérisé en ce que** les rouleaux (8) sont espacés les uns des autres d'un pas compris entre 40 et 130 mm.

10. Utilisation du dispositif de l'une des revendications précédentes pour réaliser le bombage et le refroidissement de feuilles de verre (1).

11. Utilisation selon la revendication précédente, **caractérisé en ce que** ledit dispositif est alimenté par une pression de soufflage inférieure à 3000 mm CE, et procure un coefficient d'échange thermique avec le verre-d'au moins 800 W/m².°K et avantageusement d'au moins 1000 W/m²°K.

12. Utilisation selon l'une des revendications d'utilisation précédentes, **caractérisé en ce que** le dispositif est utilisé pour le bombage et en début de zone de refroidissement.

13. Utilisation selon l'une des revendications d'utilisation précédentes **caractérisée en ce que** ledit dispositif exerce un refroidissement différenciée à l'égard des deux faces de feuilles de verre (1).

14. Utilisation selon l'une des revendications d'utilisation précédentes **caractérisée en ce que** ledit dispositif exerce un refroidissement différenciée à l'égard d'une même face de feuilles de verre (1).

15. Utilisation selon l'une des revendications d'utilisation précédentes pour réaliser des feuilles de verre (1) bombées et trempées présentant des contraintes superficielles supérieures à 100 Mpa.

16. Utilisation selon l'une des revendications d'utilisation précédentes **caractérisée en ce que** les feuilles de verre (1) présentent une épaisseur inférieure à 3 mm et de préférence inférieure à 2,8 mm.

17. Vitrage feuilleté constitué d'au moins une feuille de verre (1) bombée présentant des contraintes superficielles supérieures à 60 Mpa, ledit vitrage satisfaisant la norme DIN 32 305.

18. Vitrage feuilleté constitué d'au moins une feuille de verre (1) bombée présentant des contraintes superficielles supérieures à 100 Mpa, ledit vitrage satisfaisant la norme DIN 32 305.

## Claims

1. Device for bending and cooling and thermally toughening or hardening glass sheets (1) running over a conveyor consisting of rollers (8) that comprises two sets of rollers (8) placed with a curvilinear profile, between which the glass sheets (1) are conveyed in order to be bent and then cooled, the said rollers (8) acting on both faces of the said sheets, the said device including, for the cooling, blowing boxes that cool both faces of the said sheets, **characterized in that** boxes (7) inserted between rollers (8) have a surface (9) opposite the glass sheet (1) at a distance from the latter of less than 30 mm and preferably less than 10 mm, the said surface (9) being drilled with several holes (10) from which the air is driven towards the glass sheet.

2. Device according to the preceding claim, ***characterized in that*** the boxes (7) inserted between the rollers (8), having a surface (9) opposite the glass sheet at a distance from the latter of less than 30 mm -and preferably of less than 10 mm, and the said surface (9) of which is drilled with several holes (10) from which the air is driven towards the glass sheet are positioned above and below the path of the glass sheets.

3. Device according to Claim 1, ***characterized in that*** the boxes (7) inserted between the rollers (8) having a surface (9) opposite the glass sheet (1) at a distance from the latter of less than 30 mm and preferably less than 10 mm and the said surface (9) of which is drilled with several holes (10) from which the air is driven towards the glass sheet, equip the said device opposite only one face.

4. Device according to one of the preceding claims, ***characterized in that*** the rollers (8) are positioned in an upwardly concave curved profile.

5. Device according to the preceding claim, ***characterized in that*** the rollers (8) having a surface (9) opposite the glass sheet (1) at a distance from the latter of less than 30 mm and preferably less than 10 mm and the said surface (9) of which is drilled with several holes (10) from which the air is driven towards the glass sheet (1), are inserted between the upper rollers (8).

6. Device according to one of the preceding claims, ***characterized in that*** the rollers (8) are axisymmetric elements, such as cylinders, devices of a diabolo/barrel type, conical systems and hogged systems.

7. Device according to one of the preceding claims, ***characterized in that*** the diameters of the holes (10) are between 2 and 8 mm and are distributed with a pitch of between 3 and 6 mm.

8. Device according to one of the preceding claims, ***characterized in that*** the diameter of the rollers (8) is between 20 and 30 mm.

9. Device according to one of the preceding claims, ***characterized in that*** the rollers (8) are spaced apart with a spacing of between 40 and 130 mm.

10. Use of the device of one of the preceding claims for bending and cooling glass sheets (1).

11. Use according to the preceding claim, ***characterized in that***, the said device is supplied with a blowing pressure of less than 3000 mm of WC, and it achieves a coefficient of heat exchange with the glass of at least 800 W/m².K and advantageously at least 1000 W/m².K.

12. Use according to one of the preceding claims regarding use, **characterized in that** the device is used for the bending and at the start of the cooling zone.

13. Use according to one of the preceding claims regarding use, ***characterized in that*** the said device applies a differential cooling with regard to both faces of glass sheets (1).

14. Use according to one of the preceding claims regarding use, ***characterized in that*** the said device applies a differential cooling with regard to the one same face of the glass sheets (1).

15. Use according to one of the preceding claims regarding use for producing bent and toughened glass sheets (1) having surface stresses of greater than 100 MPa.

16. Use according to one of the preceding claims regarding use, ***characterized in that*** the glass sheets (1) have a thickness of less than 3 mm and preferably of less than 2.8 mm.

17. Laminated glazing assembly consisting of at least one bent glass sheet (1) having surface stresses of greater than 60 MPa, the said glazing assembly complying with the DIN 32 305 standard.

18. Laminated glazing assembly consisting of at least one bent glass sheet (1) having surface stresses of greater than 100 MPa, the said glazing assembly complying with the DIN 32 305 standard.

## Patentansprüche

1. Vorrichtung zum Biegen und vorspannenden Abkühlen oder thermischen Aushärten von Glasscheiben (1), die durch einen Förderer aus Rollen (8) durchlaufen, der zwei Bahnen aus in einem kurvenförmigen Profil angeordneten Rollen (8) umfasst, zwischen welchen die Glasscheiben (1) befördert werden, um gebogen und anschließend abgekühlt zu werden, wobei die Rollen (8) auf die zwei Seiten der Glasscheiben einwirken und die Vorrichtung zum Abkühlen Blaskästen, welche die zwei Seiten der Glasscheiben abkühlen, umfasst, **dadurch gekennzeichnet, dass** zwischen den Rollen (8) Kästen (7) eingefügt sind, die eine Fläche (9) mit einem Abstand von kleiner als 30 mm und vorzugsweise kleiner als 10 mm in Bezug auf die Glasscheibe (1) aufweisen, die mit mehreren Löchern (10) durchbohrt ist, um Luft auf die Glasscheibe (1) zu blasen.

2. Vorrichtung nach dem vorhergehenden Anspruch, **dadurch gekennzeichnet, dass** zwischen den Rollen (8) Kästen (7) eingefügt sind, die eine Fläche (9) mit einem Abstand von kleiner als 30 mm und vorzugsweise kleiner als 10 mm in Bezug auf die Glasscheibe (1) aufweisen, die mit mehreren Löchern (10) durchbohrt ist, um Luft auf die Glasscheibe zu blasen, über und unter dem Weg der Glasscheiben angeordnet sind.

3. Vorrichtung nach Anspruch 1, **dadurch gekennzeichnet, dass** zwischen den Rollen (8) Kästen (7) eingefügt sind, die eine Fläche (9) mit einem Abstand von kleiner als 30 mm und vorzugsweise kleiner als 10 mm in Bezug auf die Glasscheibe (1) aufweisen, die mit mehreren Löchern (10) durchbohrt ist, um Luft auf die Glasscheibe zu blasen, mit welchen die Vorrichtung nur auf einer Seite ausgerüstet ist.

4. Vorrichtung nach einem der vorhergehenden Ansprüche, **dadurch gekennzeichnet, dass** die Rollen (8) in einem gekrümmten Profil angeordnet sind, dessen Konkavität nach oben zeigt.

5. Vorrichtung nach dem vorhergehenden Anspruch, **dadurch gekennzeichnet, dass** die Kästen (7) eine Fläche (9) mit einem Abstand von kleiner als 30 mm und vorzugsweise kleiner als 10 mm in Bezug auf die Glasscheibe (1) aufweisen, die mit mehreren Löchern (10) durchbohrt ist, um Luft auf die Glasscheibe (1) zu blasen, welche zwischen den oberen Rollen (8) eingefügt sind.

6. Vorrichtung nach einem der vorhergehenden Ansprüche, **dadurch gekennzeichnet, dass** die Rollen (8) rotationssymmetrische Elemente wie Zylinder, Einrichtungen vom Typ einer doppelkegeligen Rolle, konische Systeme und gegengebogene Systeme sind.

7. Vorrichtung nach einem der vorhergehenden Ansprüche, **dadurch gekennzeichnet, dass** der Durchmesser der Löcher (10) 2 bis 8 mm beträgt und diese mit einem Abstand von 3 bis 6 mm verteilt sind.

8. Vorrichtung nach einem der vorhergehenden Ansprüche, **dadurch gekennzeichnet, dass** der Durchmesser der Rollen (8) 20 bis 30 mm beträgt.

9. Vorrichtung nach einem der vorhergehenden Ansprüche, **dadurch gekennzeichnet, dass** die Rollen (8) einen Abstand von 40 bis 130 mm voneinander haben.

10. Verwendung der Vorrichtung nach einem der vorhergehenden Ansprüche zum Erzeugen der Biegung und Abkühlen der Glasscheiben (1).

11. Verwendung nach dem vorhergehenden Anspruch, **dadurch gekennzeichnet, dass** die Vorrichtung mit einem Blasdruck von kleiner als 3000 mm Wassersäule versorgt wird und einen Wärmedurchgangskoeffizienten mit dem Glas von mindestens 800 W/m²·K und vorteilhafterweise mindestens 1000 W/m²K sicherstellt.

12. Verwendung nach einem der vorhergehenden Verwendungsansprüche, **dadurch gekennzeichnet, dass** die Vorrichtung zum Biegen und am Anfang der Abkühlungszone verwendet wird.

13. Verwendung nach einem der vorhergehenden Verwendungsansprüche, **dadurch gekennzeichnet, dass** die Vorrichtung in Bezug auf die zwei Seiten der Glasscheiben (1) eine differenzierte Abkühlung bewirkt.

14. Verwendung nach einem der vorhergehenden Verwendungsansprüche, **dadurch gekennzeichnet, dass** die Vorrichtung gegenüber ein und derselben Seite der Glasscheiben (1) eine differenzierte Abkühlung bewirkt.

15. Verwendung nach einem der vorhergehenden Verwendungsansprüche zur Herstellung von gebogenen und vorgespannten Glasscheiben (1), die eine Oberflächenspannung von über 100 MPa besitzen.

16. Verwendung nach einem der vorhergehenden Verwendungsansprüche, **dadurch gekennzeichnet, dass** die Dicke der Glasscheiben (1) weniger als 3 mm und vorzugsweise weniger als 2,8 mm beträgt.

17. Verbundglasscheibe, die aus mindestens einer gebogenen Glasscheibe (1), die eine Oberflächenspannung von über 60 MPa besitzt, besteht und die Norm DIN 32 305 erfüllt.

18. Verbundglasscheibe, die aus mindestens einer gebogenen Glasscheibe (1), die eine Oberflächenspannung von über 100 MPa besitzt, besteht und die Norm DIN 32 305 erfüllt.
